# EUROPÄISCHE PATENTANMELDUNG

(11) **EP 4 844 344 A1**
(43) Veröffentlichungstag der Anmeldung: **25.11.2026**
(21) Anmeldenummer: 25177243.0
(22) Anmeldetag: 19.05.2025
(51) Int. Cl.: G01D 5/20

(54) **INDUKTIVE POSITIONSMESSEINRICHTUNG**

(71) Anmelder: Dr. Johannes Heidenhain GmbH, 83301 Traunreut (DE)
(72) Erfinder: ECKART, Matthias, 83454 Anger (DE)

(57) **Zusammenfassung**

Die Erfindung betrifft eine induktive Positionsmesseinrichtung (1), umfasst ein Skalenelement (2) mit mehreren Wechselwirkungsflächen (7, 8) und einem Sensorträger (3) mit mehreren ersten Sensorelementen (4). Der Sensorträger (3) ist gegenüber dem Skalenelement (2) angeordnet und relativ zu diesem in mindestens zwei Messrichtungen (X, Y) bewegbar. Die ersten Sensorelemente (4) beinhalten jeweils:
• Eine Sendevorrichtung (6-1), durch die ein magnetischer Fluss in den Wechselwirkungsflächen (7, 8) erzeugbar ist und
• eine Empfangsvorrichtung (9-1), mit einer ersten Empfangseinheit (9-1.1) und einer zweiten Empfangseinheit (9-1.2), durch die jeweils eine Änderung des magnetischen Flusses empfangbar ist.

Die ersten Sensorelemente (4) sind so angeordnet, dass diese Seiten eines ersten Vierecks bilden, sodass eine erste Teilfläche (F1) des Sensorträgers (3) definierbar ist.

Der Sensorträger (3) umfasst mindestens ein zweites Sensorelement (5), wobei das zweite Sensorelement (5) innerhalb der ersten Teilfläche (F1) angeordnet ist.

## Beschreibung

### GEBIET DER TECHNIK

Die Erfindung betrifft eine induktive Positionsmesseinrichtung gemäß dem Oberbegriff des Anspruchs 1.

### STAND DER TECHNIK

Aus der europäischen Patentanmeldung mit der Anmeldenummer EP24197209, die einen Stand der Technik gemäß Art. 54 (3) EPÜ darstellt, ist eine induktive Positionsmesseinrichtung bekannt, die zwei Baugruppen umfasst, welche relativ zueinander bewegbar sind. Die erste Baugruppe enthält mehrere zu einem Viereck angeordnete Linearsensoren, die in der Lage sind ein elektromagnetisches Feld zu erzeugen und ein durch die zweite Baugruppe moduliertes elektromagnetisches Feld zu empfangen. Die zweite Baugruppe umfasst mehrere Wechselwirkungsflächen, welche auf einem Leiterplattensubstrat zu einem Raster angeordnet sind.

Eine induktive Positionsmesseinrichtung gemäß dem Oberbegriff des Anspruchs 1 ist ebenfalls aus der europäischen Patentanmeldung mit der Anmeldenummer EP24197213 bekannt, die ebenfalls einen Stand der Technik gemäß Art. 54 (3) EPÜ darstellt.

### ZUSAMMENFASSUNG DER ERFINDUNG

Der Erfindung liegt die Aufgabe zugrunde eine induktive Positionsmesseinrichtung bereitzustellen, welche in der Lage ist, eine Positionsbestimmung mit vergleichsweise hoher Genauigkeit durchzuführen und dabei kompakt ausgebildet ist.

Diese Aufgabe wird erfindungsgemäß durch die Merkmale des Anspruchs 1 gelöst. Vorteilhafte Ausgestaltungen und Weiterbildungen sind in den jeweils abhängigen Ansprüchen angegeben.

Die erfindungsgemäße induktive Positionsmesseinrichtung umfasst ein Skalenelement mit mehreren Wechselwirkungsflächen und einen Sensorträger mit mehreren ersten Sensorelementen. Der Sensorträger ist gegenüber dem Skalenelement angeordnet und relativ zu diesem in mindestens zwei Messrichtungen bewegbar. Die ersten Sensorelemente beinhalten jeweils:
- Eine Sendevorrichtung, durch die ein magnetischer Fluss in den Wechselwirkungsflächen erzeugbar ist und
- eine Empfangsvorrichtung mit mindestens einer ersten Empfangseinheit, durch die eine Änderung des magnetischen Flusses empfangbar ist.

Die ersten Sensorelemente sind so angeordnet, dass diese Seiten eines ersten Vierecks bilden bzw. repräsentieren, sodass eine erste viereckige Teilfläche des Sensorträgers definierbar bzw. abgrenzbar ist.

Der Sensorträger umfasst mindestens ein zweites Sensorelement, wobei das zweite Sensorelement innerhalb der ersten Teilfläche angeordnet ist.

Die ersten Sensorelemente sind im Rahmen dieser Offenbarung bevorzugt als planare Linearsensoren ausgebildet, wobei jedes erste Sensorelement als eigenständig betreibbare elektronische Bauteilgruppe agiert. Ein erstes Sensorelement kann über seine Sendevorrichtung mit den Wechselwirkungsflächen des Skalenelements induktiv Wechselwirken und einen elektromagnetischen Fluss in den Wechselwirkungsflächen erzeugen. Durch die Empfangsvorrichtung ist das erste Sensorelement in der Lage eine Änderung des magnetischen Flusses zumindest bei bestimmten Wechselwirkungsflächen zu empfangen und in elektrische Signale umzuwandeln. Anhand der elektrischen Signale kann für ein erstes Sensorelement mindestens ein Positionswert und ergänzend oder alternativ ein Abstandswert bezüglich der relativen Position des ersten Sensorelements zum Skalenelement bestimmbar sein. Vorteilhafterweise sind die ersten Sensorelemente auf oder im Sensorträger angeordnet. Bevorzugt sind die ersten Sensorelemente länglich ausgebildet, beispielsweise in Form eines Rechtecks. Mit Vorteil sind mindestens zwei erste Sensorelemente entlang der ersten Messrichtung angeordnet und mindestens zwei Sensorelemente entlang der zweiten Messrichtung angeordnet.

Ein zweites Sensorelement ist im Rahmen dieser Offenbarung ein eigenständiges elektronisches Bauteil bzw. eine eigenständige elektronische Bauteilgruppe und unabhängig von den ersten Sensorelementen betreibbar. Durch das oder die zweite/n Sensorelement/e können zusätzliche und ergänzend oder alternativ genauere Informationen durch die induktive Positionsmesseinrichtung erfasst werden. Bevorzugt handelt es sich bei dem zweiten Sensorelement um einen Linearsensor zum Erfassen von Positionsinformationen und ergänzend oder alternativ von Abstandsinformationen. Bei dem Linearsensor kann es sich insbesondere um einen induktiven Sensor handeln, jedoch sind für die zweiten Sensorelemente auch alternative Sensorprinzipien denkbar, beispielsweise kapazitive, magnetische oder optische Sensoren. Das zweite Sensorelement ist jedoch nicht auf einen Linearsensor zum Erfassen von Positionsinformationen oder Abstandsinformationen beschränkt, sondern kann alternativ auch zum Erfassen von einer oder mehreren physikalischen Größen (z. B. Temperatur, Feuchte, etc.) dienen.

Die ersten Sensorelemente sind so angeordnet, dass diese die Seiten eines ersten Vierecks bilden bzw. die Seiten eines ersten Vierecks repräsentieren, wodurch eine erste Teilfläche des Sensorträgers abgrenzbar ist. Hierbei müssen sich die einzelnen ersten Sensorelemente nicht zwangsläufig berühren oder überlagern, um das erste Viereck auszubilden. Es ist vielmehr ausreichend, wenn die ersten Sensorelemente so zueinander angeordnet sind, dass das Viereck auch durch virtuelle Verlängerung der ersten Sensorelemente in ihrer Längsrichtung vollständig ausgebildet wird. Die (virtuellen) Schnittpunkten der innen liegenden Längsseiten der ersten Sensorelemente repräsentieren dabei die Ecken des ersten Vierecks. Vorzugsweise handelt es sich bei dem Viereck um ein Rechteck, insbesondere um ein Quadrat.

Unter dem Anordnen des zweiten Sensorelements innerhalb der ersten Teilfläche ist im Rahmen dieser Offenbarung zu verstehen, dass das zweite Sensorelement vollständig, d. h. in seiner Gesamtheit, innerhalb der ersten Teilfläche angeordnet ist. Insbesondere ist hierunter nicht zu verstehen, dass das zweite Sensorelement nur teilweise innerhalb des ersten Vierecks angeordnet ist und dabei ein erstes Sensorelement oder mehrere erste Sensorelemente überlagert.

Gemäß einer vorteilhaften Weiterbildung der Erfindung ist mindestens ein zweites Sensorelement für die erste Messrichtung und mindestens ein zweites Sensorelement für die zweite Messrichtung vorgesehen, wobei die zweiten Sensorelemente jeweils beinhalten:
- eine Sendevorrichtung, durch die ein magnetischer Fluss in den Wechselwirkungsflächen erzeugbar ist, und
- eine Empfangsvorrichtung, mit mindestens einer ersten Empfangseinheit, durch die jeweils eine Änderung des magnetischen Flusses empfangbar ist.

Die zweiten Sensorelemente sind im Rahmen der vorteilhaften Weiterbildung bevorzugt als planare Linearsensoren ausgebildet, wobei jedes zweite Sensorelement als eigenständig betreibbare elektronische Bauteilgruppe agiert. Ein zweites Sensorelement kann über seine Sendevorrichtung mit den Wechselwirkungsflächen des Skalenelements induktiv Wechselwirken und einen elektromagnetischen Fluss in den Wechselwirkungsflächen erzeugen. Durch die Empfangsvorrichtung ist ein zweites Sensorelement in der Lage, eine Änderung des magnetischen Flusses bei bestimmten Wechselwirkungsflächen zu empfangen und in elektrische Signale umzuwandeln. Anhand der elektrischen Signale kann für ein zweites Sensorelement mindestens ein Positionswert und ergänzend oder alternativ ein Abstandswert bezüglich der relativen Position des zweiten Sensorelements zum Skalenelement bestimmbar sein. Vorteilhafterweise sind die zweiten Sensorelemente auf oder im Sensorträger angeordnet. Bevorzugt sind die zweiten Sensorelemente länglich ausgebildet, beispielsweise in Form eines Rechtecks.

In weiterer Ausgestaltung ist die erste Empfangseinheit der ersten Sensorelemente als sinusförmige Empfängerleitungen mit einer ersten Periodenlänge ausgebildet. Auch die erste Empfangseinheit der zweiten Sensorelemente kann als sinusförmige Empfängerleitungen mit einer zweiten Periodenlänge ausgebildet sein. Vorteilhafterweise ist die zweite Periodenlänge kleiner als die erste Periodenlänge.

Gemäß einer Ausführungsform ist vorgesehen, dass die ersten Sensorelemente jeweils neben der ersten Empfangseinheit auch eine zweite Empfangseinheit aufweisen, welche identisch zur ersten Empfangseinheit der ersten Sensorelemente ausgebildet ist.

Gemäß einer Ausführungsform ist vorgesehen, dass die zweiten Sensorelemente jeweils neben der ersten Empfangseinheit auch eine zweite Empfangseinheit aufweisen, welche identisch zur ersten Empfangseinheit der zweiten Sensorelemente ausgebildet ist.

In weiterer Ausgestaltung umfassen die Empfängerleitungen der ersten beziehungsweise zweiten Empfangseinheit der ersten und zweiten Sensorelemente jeweils zwei Spulenleitungen, welche jeweils aus mehreren Leitungsteilstücken ausgebildet sind, wobei die zwei Spulenleitungen entlang der Messrichtung des entsprechenden ersten beziehungsweise zweiten Sensorelements mit einem Versatz verschoben angeordnet sind.

Gemäß einer Ausführungsform weist die erste Empfangseinheit zur zweiten Empfangseinheit der ersten Sensorelemente und ergänzend oder alternativ der zweiten Sensorelemente jeweils einen Versatz in der zur Längserstreckung des entsprechenden Sensorelements orthogonalen Richtung auf.

In weiterer Ausgestaltung ist vorgesehen, dass mindestens vier zweite Sensorelemente vorgesehen sind, welche so angeordnet sind, dass diese Seiten eines weiteren Vierecks bilden bzw. repräsentieren, sodass eine weitere viereckige Teilfläche der ersten Teilfläche definierbar bzw. abgrenzbar ist.

Mit Vorteil ist vorgesehen, dass die ersten Sensorelemente und die zweiten Sensorelemente konzentrisch zum Mittelpunkt des Sensorträgers angeordnet sind.

Gemäß einer Ausführungsform ist vorgesehen, dass das Skalenelement
- mehrere erste Wechselwirkungsflächen mit einer ersten Breite umfasst, welche zu einem ersten Raster mit ersten Lücken angeordnet sind, und
- mehrere zweite Wechselwirkungsflächen mit einer zweiten Breite umfasst, welche zu einem zweiten Raster mit zweiten Lücken angeordnet sind. Dabei ist die zweite Breite kleiner als die erste Breite ausgebildet. Zusätzlich sind die zweiten Lücken kleiner ausgebildet als die ersten Lücken.

Gemäß einer Ausführungsform ist vorgesehen, dass für die erste Periodenlänge und die zweite Periodenlänge der folgende Zusammenhang gilt: $T 1 = B 1 + L 1 und T 2 = B 2 + L 2 ;$ mit:
T1 := erste Periodenlänge,
T2 := zweite Periodenlänge,
B1 := Breite der ersten Wechselwirkungsflächen,
B2 := Breite der zweiten Wechselwirkungsflächen,
L1 := Breite der ersten Lücken,
L2 := Breite der zweiten Lücken;

In weiterer Ausgestaltung ist vorgesehen, dass für die Abmessung des zweiten Rasters der folgende Zusammenhang gilt: ${B}_{R 2} = n ⋅ B 1 + \left(n-1\right) ⋅ L 1 ;$ mit:
B_{R2}:= Abmessung des zweiten Rasters in der ersten bzw. zweiten Messrichtung,
B1 := Breite der ersten Wechselwirkungsflächen,
L1 := Breite der ersten Lücken,
n := Wechselwirkungsflächen-Parameter mit $n ∈ ℕ *$;
N* steht hierbei für die Menge der natürlichen Zahlen, welche die positiven ganzen Zahlen ohne die Null umfasst ( $ℕ * = ℕ \ \left\{0\right\}$).

Vorteilhafterweise ist das zweite Raster aus zweiten Wechselwirkungsflächen von dem ersten Raster aus ersten Wechselwirkungsflächen teilweise oder vollständig umgeben.

Gemäß einer Ausführungsvariante ist vorgesehen,
- dass die ersten Sensorelemente durch eine erste Elektronikbaugruppe betreibbar sind und ihnen mindestens ein erster Messbereich zugeordnet ist und
- dass die zweiten Sensorelemente durch eine zweite Elektronikbaugruppe betreibbar sind und ihnen mindestens ein zweiter Messbereich zugeordnet ist.
Bei einer Positionsbestimmung durch die induktive Positionsmesseinrichtung werden die ersten Sensorelemente dauerhaft betrieben und die zweiten Sensorelemente nur dann betrieben, wenn sich das zweite Raster zumindest teilweise innerhalb des zweiten Messbereichs befindet.

Gemäß einer anderen Ausführungsvariante ist vorgesehen, dass die induktive Positionsmesseinrichtung eine dritte Elektronikbaugruppe zum abwechselnden Betreiben der ersten und zweiten Sensorelemente um-fasst. Den ersten bzw. zweiten Sensorelementen ist jeweils mindestens ein erster bzw. zweiter Messbereich zugeordnet. Bei einer Positionsbestimmung werden einerseits nur die ersten Sensorelemente betrieben, wenn sich das zweite Raster vollständig außerhalb des zweiten Messbereichs befindet. Andererseits werden nur die zweiten Sensorelemente betrieben, wenn sich das zweite Raster zumindest teilweise innerhalb des zweiten Messbereichs befindet.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert.

### KURZE BESCHREIBUNG DER ZEICHNUNGEN

### Es zeigen

- Fig. 1: eine perspektivische Ansicht einer induktiven Positionsmesseinrichtung,
- Fig. 2: ein Ausführungsbeispiel des Sensorträgers,
- Fig. 3: ein Ausführungsbeispiel eines ersten Sensorelements,
- Fig 4: ein Ausführungsbeispiel eines zweiten Sensorelements,
- Fig. 5: eine Ausführungsvariante eines Skalenelements in Draufsicht,
- Fig. 6a: eine erstes Ausführungsbeispiel mit zu einem Viereck angeordneten Sensorelementen,
- Fig. 6b: ein zweites Ausführungsbeispiel mit zu einem Viereck angeordneten Sensorelementen,
- Fig. 7: eine weitere Ausführungsvariante eines Skalenelements in Draufsicht,
- Fig. 8: eine Darstellung der Teilmessbereiche der einzelnen Sensorelemente in Draufsicht,
- Fig. 9: eine Darstellung der kombinierten Messbereiche in Draufsicht,
- Fig. 10: ein erstes Ausführungsbeispiel einer Mess- und Auswerteeinrichtung der induktiven Positionsmesseinrichtung als schematisches Blockdiagramm,
- Fig. 11: ein zweites Ausführungsbeispiel einer Mess- und Auswerteeinrichtung der induktiven Positionsmesseinrichtung als schematisches Blockdiagramm;

### BESCHREIBUNG DER AUSFÜHRUNGSFORMEN

Einige spezifische Ausführungsformen der vorliegenden Erfindung werden im Folgenden unter Bezugnahme der Zeichnungen genauer beschrieben.

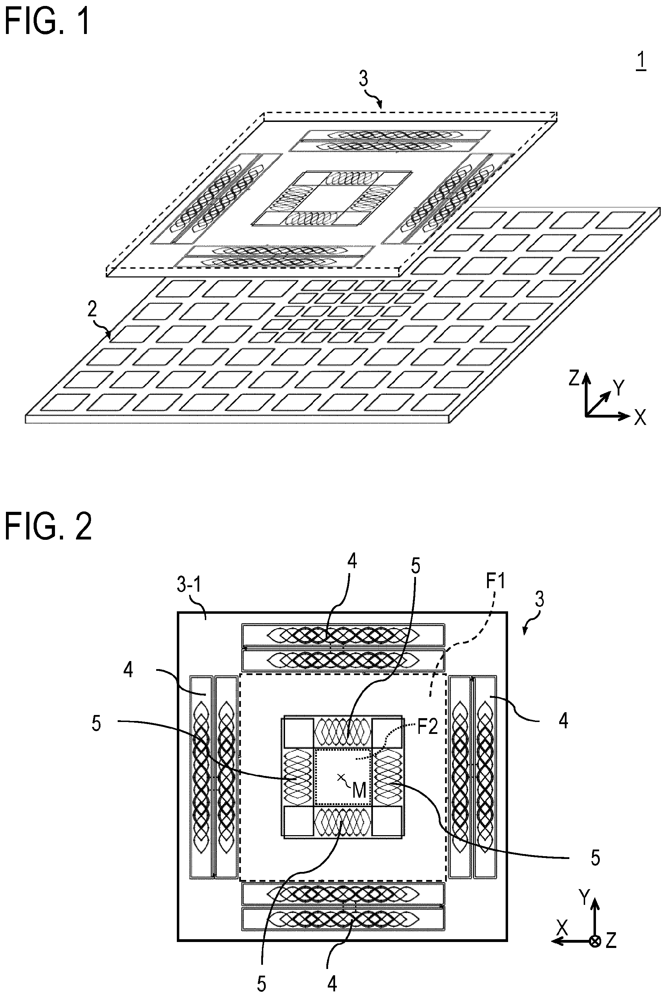

Fig. 1 zeigt eine vereinfachte perspektivische Ansicht einer induktiven Positionsmesseinrichtung, umfassend einen Sensorträger 3 und ein Skalenelement 2. Die induktive Positionsmesseinrichtung 1 ist eingerichtet die relative Position des Sensorträgers 3 bezüglich dem Skalenelement 2 in bis zu sechs Freiheitsgraden zu bestimmen. Hierzu nutzt die induktive Positionsmesseinrichtung 1 mehrere Sensorelemente 4, 5, welche dem Sensorträger 3 zugeordnet sind und welche mit Wechselwirkungsflächen 7, 8 des Sensorträgers 3 induktiv wechselwirken. Die Sensorelemente 4, 5 und die Wechselwirkungsflächen 7, 8 befinden sich auf jenen Seiten von Skalenelement 2 und Sensorträger 3, die einander in der Z-Richtung zugewandt sind.

Der Sensorträger 3 ist gegenüber dem Skalenelement 2 in Z-Richtung versetzt angeordnet, sodass ein Luftspalt zwischen dem Sensorträger 3 und dem Skalenelement 2 ausgebildet ist. Der Sensorträger 3 kann relativ zum Skalenelement 2 zumindest in einer ersten Messrichtung X und in einer zweiten Messrichtung Y bewegt werden, wobei gleichzeitig eine Änderung des Abstands zwischen Sensorträger 3 und Skalenelement 2 möglich ist, sodass auch eine relative Verlagerung in der dritten Messrichtung Z gemessen und Abstandswerte und Rotationswerte bestimmt werden können.

Das Skalenelement 2 kann beispielsweise stationär an einem ortsfesten Objekt im Arbeitsraum eines Industrieroboters angeordnet sein und der Sensorträger 3 an einem zweiten im Raum bewegbaren Objekt, beispielsweise dem Endeffektor des Industrieroboters.

Durch die induktive Positionsmesseinrichtung 1 kann dann bei einer Annäherung des mit dem Sensorträger 3 versehenen Endeffektors an das Skalenelement 2 die relative Position des Endeffektors zum Skalenelement in allen drei Messrichtungen X, Y und Z sowie eine Rotation um diese Achsen hochgenau bestimmt werden.

Alternativ ist es auch denkbar, dass der Skalenträger 2 am Endeffektor des Industrieroboters angeordnet ist und sich der Sensorträger 3 stationär an einem ortsfesten Objekt im Arbeitsraum befindet.

Fig. 2 zeigt ein Ausführungsbeispiel des Sensorträgers 3 aus einer Perspektive, die der Sichtrichtung in Fig. 1 vom Skalenelement 2 entlang der Z-Richtung auf den Sensorträger 3 entspricht.

Der Sensorträger 3 umfasst ein Trägersubstrat 3-1 aus einem elektrisch isolierenden Grundmaterial, beispielsweise aus einem Epoxidharz. Durch ein photochemisches Ätzverfahren wird auf dem Trägersubstrat 3-1 eine oder mehrere elektrisch leitfähige Schichten, beispielsweise aus Kupfer, strukturiert aufgebracht, sodass die ersten und zweiten Sensorelemente 4, 5 ausgebildet werden.

Der Sensorträger 3 umfasst vier erste Sensorelemente 4, welche annähernd rechteckig ausgebildet sind, wobei zwei erste Sensorelemente 4 entlang der ersten Messrichtung X und zwei erste Sensorelemente 4 entlang der zweiten Messrichtung Y verlaufen. Die ersten Sensorelemente 4 sind zueinander beabstandet angeordnet, sodass durch diese eine viereckige Teilfläche F1 des Sensorträgers 3 abgegrenzt wird. Bevorzugt werden die ersten Sensorelemente 4 entlang der Seiten des ebenfalls viereckigen Trägersubstrats 3-1 des Sensorträgers 3 angeordnet, sodass die Teilfläche F1 annähernd größtmöglich ausgebildet ist.

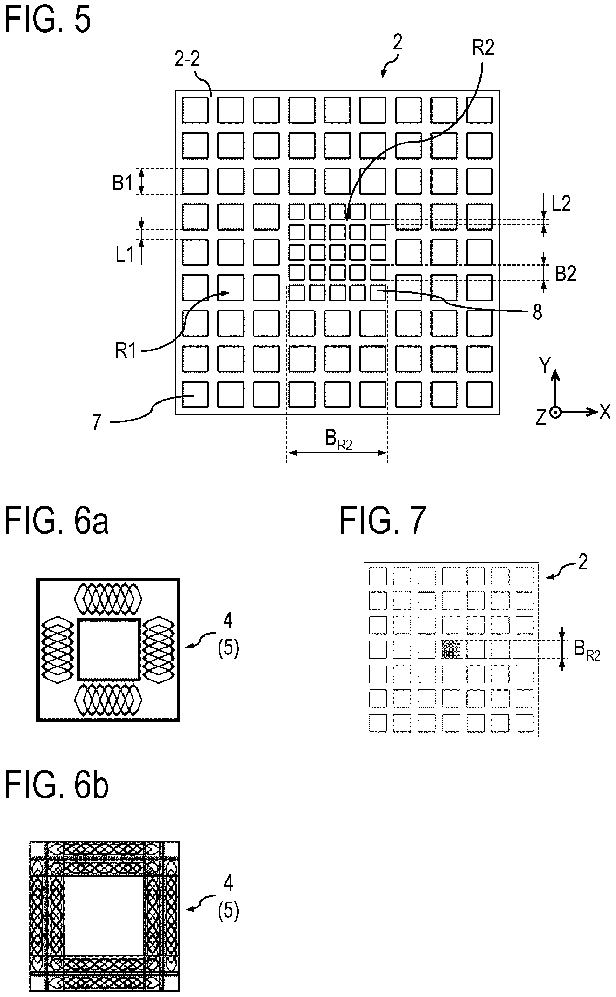

Die ersten Sensorelemente 4 können, wie in Fig. 2 veranschaulicht, ohne eine Überlagerung der einzelnen ersten Sensorelemente 4 angeordnet sein. Gemäß eines in Fig. 6b gezeigten alternativen Ausführungsbeispiels ist jedoch auch das Überlagern der einzelnen ersten Sensorelemente 4 möglich.

Innerhalb der Teilfläche F1 sind vier zweite Sensorelemente 5 angeordnet, welche ebenfalls annähernd rechteckig ausgebildet sind, wobei wiederum zwei zweite Sensorelemente 5 entlang der ersten Messrichtung X und zwei zweite Sensorelemente 5 entlang der zweiten Messrichtung Y verlaufen. Auch die zweiten Sensorelemente 5 sind zueinander beabstandet angeordnet, sodass durch die zweiten Sensorelemente 5 eine weitere viereckige Teilfläche F2 der ersten Teilfläche F1 abgegrenzt wird.

Durch das Anordnen der zweiten Sensorelemente 5 innerhalb der ersten Teilfläche F1 kann ein besonders kompakter Sensorträger 3 erreicht werden, welcher gegenüber einem Sensorträger 3 mit nur ersten Sensorelementen 3 zudem noch mehr Messinformationen und damit eine noch genauere Positionsbestimmung ermöglicht.

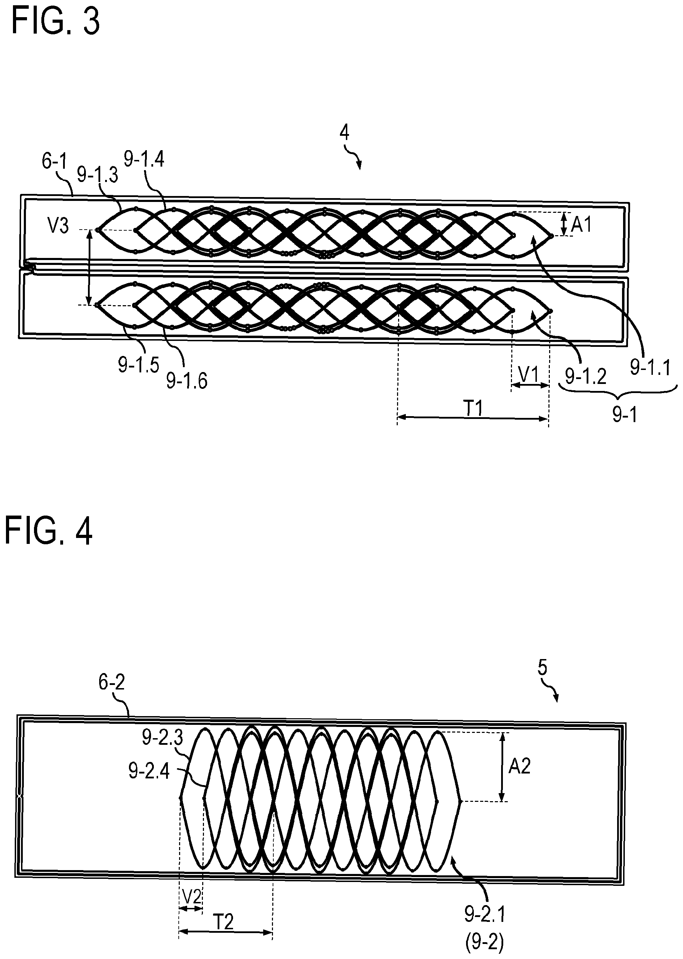

Die zweiten Sensorelemente 5 können, wie in Fig. 3 gezeigt, teilweise oder alternativ vollständig untereinander überlagert angeordnet sein.

Mit einer überlagerten Anordnung der zweiten Sensorelemente 5 ist gemeint, dass wenigstens zwei benachbarte und orthogonal zueinander liegende zweite Sensorelemente 5 sich bei einer Betrachtung in der dritten Messrichtung Z überlappen.

Unter einer teilweisen Überlagerung ist zu verstehen, dass die Überlagerungsfläche der wenigstens zwei benachbarten und orthogonal zueinander liegenden zweiten Sensorelemente 5 nicht der größtmöglichen Überlagerungsfläche entspricht.

Unter einer vollständigen Überlagerung ist zu verstehen, dass die Überlagerungsfläche der wenigstens zwei benachbarten und orthogonal zueinander liegenden zweiten Sensorelemente 5 der größtmöglichen Überlagerungsfläche entspricht.

Die zu einem ersten Viereck angeordneten ersten Sensorelemente 4 und die zu einem zweiten Viereck angeordneten zweiten Sensorelemente 5 sind konzentrisch zum Mittelpunkt M des Sensorträgers 3 positioniert.

Zwischen den, bezüglich dem Mittelpunkt M, innen liegenden Längsseiten der ersten Sensorelemente 4 und den, bezüglich dem Mittelpunkt M, außen liegenden Längsseiten der zweiten Sensorelemente 5 befindet sich ein unstrukturierter Bereich ohne erste oder zweite Sensorelemente 4, 5. Dieser unstrukturierte Bereich entspricht flächenmäßig der ersten Teilfläche F1 abzüglich der zweiten Teilfläche F2 und abzüglich der Fläche der - gegebenenfalls überlagerten - zweiten Sensorelemente 5.

Vorteilhafterweise sind die zweiten Sensorelemente 5 kleiner ausgebildet als die ersten Sensorelemente 4, insbesondere bezüglich ihrer Längserstreckung. Damit ist sichergestellt, dass die zweiten Sensorelemente 5 innerhalb der ersten Teilfläche F1 untergebracht werden können. Zusätzlich wird hierdurch auch erreicht, dass der unstrukturierte Bereich groß genug ausgebildet ist, sodass bei einer Auslenkung des Sensorträgers 10 relativ zum Skalenelement 20 eine Überlagerung zwischen den ersten Sensorelementen 4 und den zweiten Wechselwirkungsflächen 8 möglichst vermieden werden kann, damit ein möglichst hohe Signalqualität gewährleistet ist.

Fig. 3 zeigt eine erste Ausführungsvariante der ersten Sensorelemente 4. Das gezeigte erste Sensorelement 4 ist ein länglicher Linearsensor umfassend eine Sendevorrichtung 6-1 in Form einer planaren Leiterbahn, durch welche ein magnetischer Fluss in den Wechselwirkungsflächen 7, 8 des Skalenelements 2 in Form von Wirbelströmen erzeugt wird. Zusätzlich ist eine Empfangsvorrichtung 9-1 zum Empfangen einer Änderung des magnetischen Flusses in den Wechselwirkungsflächen 7 vorgesehen. Hierfür umfasst die Empfangsvorrichtung 9-1 eine erste und zweite Empfangseinheit 9-1.1, 9-1.2 aus Empfängerleitungen in Form von planare Spulenleitungen 9-1.3, 9-1.4; 9-1.5, 9-1.6 mit jeweils sinusförmigem Verlauf.

Der ersten Empfangseinheit 9-1.1 sind die erste und zweite Spulenleitung 9-1.3, 9-1.4 zugeordnet, welche über einen ersten Versatz V1 in der Längsrichtung des ersten Sensorelements 4 zueinander verschoben angeordnet sind. Der sinusförmige Verlauf der Spulenleitungen 9-1.3, 9-1.4 der ersten Sensorelemente 4 erstreckt sich über mehrere volle Sinusperioden und ist durch eine mittlere erste Amplitude A1 und eine mittlere erste Periodenlänge T1 charakterisierbar.

Die erste und zweite Spulenleitung 9-1.3, 9-1.4 sind jeweils aus mehreren einzelnen Leitungsteilstücken ausgebildet, welche in unterschiedlichen Lagen des Trägersubstrats 3-1 angeordnet sein können, und gemeinsam die elektrisch leitende erste bzw. zweite Spulenleitung 9-1.3, 9-1.4 ergeben. Einzelheiten zu einem solchen mehrlagigen Aufbau aus Leitungsteilstücken sind in der europäischen Patentanmeldung EP 4 530 581 A1 beschrieben, auf welche insofern ausdrücklich Bezug genommen wird.

Die zweite Empfangseinheit 9-1.2 umfasst die dritten und vierten Spulenleitung 9-1.5, 9-1.6 welche analog zur ersten und zweiten Spulenleitung 9-1.3, 9-1.4 ausgebildet sind. Der sinusförmige Verlauf der Spulenleitungen 9-1.4, 9-1.5 der ersten Sensorelemente 4 erstreckt sich über mehrere volle Sinusperioden und weist ebenfalls die mittlere erste Amplitude A1 und die mittlere erste Periodenlänge T1 auf.

Die erste und zweite Empfangseinheit 9-1.1, 9-1. 2 besitzen zueinander einen dritten Versatz V3 in jener Richtung, welche zu der Längsrichtung des ersten Sensorelements 4 orthogonalen verläuft.

Die beiden Empfangseinheiten 9-1.1, 9-1. 2 des ersten Sensorelements 4 sind durch die Sendevorrichtung 6-1 umgeben, d h. von allen Seiten umschlossen. Beispielsweise kann, wie in Fig. 3 gezeigt, eine Empfangseinheit 9-1.1 innerhalb eines ersten Rechtecks und die andere Empfangseinheit 9-1. 2 innerhalb des anderen Rechtecks angeordnet. Alternativ können auch beide Empfangseinheiten 9-1.1, 9-1. 2 durch die Sendevorrichtung 6-1, welche die Form eines einzigen Rechtecks hat, umgeben sein.

Fig. 4 zeigt eine erste Ausführungsvariante der zweiten Sensorelemente 5. Das gezeigte zweite Sensorelement 5 ist ein länglicher Linearsensor umfassend eine Sendevorrichtung 6-2 in Form einer planaren Leiterbahn, durch welche ein magnetischer Fluss insbesondere in den zweiten Wechselwirkungsflächen 8 des Skalenelements 2 in Form von Wirbelströmen erzeugt wird. Zusätzlich ist eine Empfangsvorrichtung 9-2.1 zum Empfangen einer Änderung des magnetischen Flusses insbesondere bei den zweiten Wechselwirkungsflächen 8 vorgesehen. Hierfür umfasst die Empfangsvorrichtung 9-2 eine erste Empfangseinheit 9-2.1 aus Empfängerleitungen in Form von zwei planaren Spulenleitungen 9-2.3, 9-2.4 mit jeweils sinusförmigem Verlauf.

Auch die erste und zweite Spulenleitung 9-2.3, 9-2.4 sind über einen zweiten Versatz V2 in der Längsrichtung des zweiten Sensorelements 5 zueinander verschoben angeordnet. Der sinusförmige Verlauf der Spulenleitungen 9-2.3, 9-2.4 der zweiten Sensorelemente 5 erstreckt sich über mehrere volle Sinusperioden und ist durch eine mittlere zweite Amplitude A2 und eine mittlere zweite Periodenlänge T2 charakterisierbar.

Auch bei den zweiten Sensorelementen 5 können die erste und zweite Spulenleitung 9-2.3, 9-2.4 jeweils aus mehreren einzelnen Leitungsteilstücken ausgebildet sein, welche in unterschiedlichen Lagen des Trägersubstrats 3-1 angeordnet sein können, und welche gemeinsam die elektrisch leitende erste bzw. zweite Spulenleitung 9-2.3, 9-2.4 ergeben.

Die Empfangseinheit 9-2.1, umfassend die beiden Spulenleitungen 9-2.3, 9-2.4, des zweiten Sensorelements 5 ist durch die Sendevorrichtung 6-2 umgeben, d. h. von allen Seiten umschlossen. Insbesondere kann, wie in Fig. 4 gezeigt, die Sendevorrichtung 6-2 die beiden Spulenleitungen 9-2.3, 9-2.4 in Form eines Rechtecks umgeben.

Für die ersten und zweiten Sensorelemente 4, 5 sind jedoch auch andere Ausführungsvarianten möglich. So kann die Empfangsvorrichtung 9-2 der zweiten Sensorelemente 5 beispielsweise auch zwei Empfangseinheiten vorsehen und damit grundsätzlich ähnlich zur Ausführungsvariante der ersten Sensorelemente 4 aus Fig. 3 ausgebildet sein. Eine solche Ausführungsvariante ist exemplarisch in Fig. 6b dargestellt.

Eine weitere alternative Ausführungsvariante für die ersten Sensorelemente 4 und ergänzend oder alternativ zweiten Sensorelemente 5 ist in Fig. 6a gezeigt. Bei einer Anordnung von vier Sensorelementen 4, 5 ist es beispielsweise auch möglich, dass alle vier Sensorelemente 4, 5 eine gemeinsame Sendevorrichtung besitzen, welche die Empfangsvorrichtungen umgibt.

Fig. 5 zeigt ein erstes Ausführungsbeispiel für den Skalenträger 2, welcher ein Trägersubstrat 2-2 und mehrere erste Wechselwirkungsflächen 7 und mehrere zweite Wechselwirkungsflächen 8 umfasst, welche jeweils zu einem Raster R1, R2 angeordnet sind.

Das Trägersubstrat 2-2 kann beispielsweise aus einem elektrisch isolierendem Grundmaterial, wie etwa faserverstärktem Epoxidharz, bestehen, auf dem die einzelnen Wechselwirkungsflächen 7, 8 dann über ein photochemisches Ätzverfahren ausgebildet werden. Die Wechselwirkungsflächen 7, 8 bestehen bei einer solchen Ausführungsvariante jeweils z. B. aus einer dünnen Metallschicht, welche induktiv wechselwirken kann.

Gemäß einer alternativen Ausführungsvariante des Skalenträgers 2 können das Trägersubstrat und die ersten und zweiten Wechselwirkungsflächen 7, 8 auch aus einem einzigen Substrat ausgebildet sein. Insbesondere kann es sich hierbei um ein Metallsubstrat handeln, bei dem die einzelnen Wechselwirkungsflächen 7, 8 in Form von Erhöhungen, beispielsweise durch eine Fräsprozess, ausgebildet werden. Zwischen den einzelnen erhöht ausgebildeten Wechselwirkungsflächen ist in diesem Fall kein Metallsubstrat vorhanden und die Lücken L1, L2 liegen als Luftspalt vor, welcher beispielsweise durch ein Epoxidharz gefüllt sein können, sodass eine plane Oberfläche bezüglich den exponierten Wechselwirkungsflächen 7, 8 und den ausgegossenen Lücken L1, L2 vorliegt.

Die zweiten Wechselwirkungsflächen 8 sind bevorzugt identisch ausgebildet, beispielsweise quadratisch. Die zweiten Wechselwirkungsflächen 8 sind in der Mitte des quadratisch ausgebildeten Skalenträgers 2 zu einem zweiten Rasters R2 mit einem regelmäßigen Abstand zueinander angeordnet. Die zweiten Wechselwirkungsmittel 8 besitzen eine zweite Breite B2 und zwischen ihnen befindet sich die zweiten Lücken L2, welche nicht induktiv Wechselwirken, da sie entweder Teil des Trägersubstrats 2-2 oder als Luftspalt ausgebildet sind.

Wie in Fig. 5 dargestellt, umfasst das zweite Raster R2 im vorliegenden ersten Ausführungsbeispiel fünf Reihen aus zweiten Wechselwirkungsflächen 8 und fünf Spalten aus zweiten Wechselwirkungsflächen 8.

Das zweite Raster R2 ist umgeben von mehreren ersten Wechselwirkungsflächen 7, welche ein erstes Raster R1 bilden. Auch die ersten Wechselwirkungsflächen 7 sind identisch ausgebildet, beispielsweise wie in Fig. 5 gezeigt, als Quadrate. Die ersten Wechselwirkungsflächen 7 besitzen eine erste Breite B1 und jeweils einen Abstand zueinander entsprechend der Breite der ersten Lücken L1.

Das erste Raster R1 umfasst neun - sechs vollständig besetzte und drei unvollständig mit ersten Wechselwirkungsflächen 7 besetzte - Reihen aus ersten Wechselwirkungsflächen 7 und neun - sechs vollständig besetzte und drei unvollständig mit ersten Wechselwirkungsflächen 7 besetzte - Spalten aus ersten Wechselwirkungsflächen 7.

Der Abstand zwischen den äußeren zweiten Wechselwirkungsflächen 8 des zweiten Rasters R2 und den angrenzenden ersten Wechselwirkungsflächen 7 des ersten Rasters R1 entspricht der Breite der ersten Lücken L1.

Bevorzugt ist die Breite B_{R2} des zweiten Rasters R2 gemäß einem vorbestimmten Verhältnis ausgebildet, sodass das zweite Raster R2 in das erste Raster R1 implementiert werden kann. Die Wahl der Breite des zweiten Rasters B_{R2} erfolgt vorteilhafterweise gemäß folgendem Zusammenhang: ${B}_{R 2} = n ⋅ B 1 + \left(n-1\right) ⋅ L 1 ;$ mit:
B_{R2}: Abmessung des zweiten Rasters R2 in der ersten Messrichtung X bzw. der zweiten Messrichtung Y,
B1: Breite der ersten Wechselwirkungsflächen 7,
L1: Breite der ersten Lücken,
n: Wechselwirkungsflächen-Parameter mit $n ∈ ℕ *$;

Der Wechselwirkungsflächen-Parameter n steht dabei für die Anzahl der unbesetzten Reihen bzw. Spalten innerhalb des ersten Rasters R1, welche das zweite Raster R2 enthalten sollen. Im in Fig. 5 gezeigten Ausführungsbeispiel gilt n = 3, wodurch sich für das zweite Raster R2 ein Breite von B_{R2} = 3 ·B1 + 2 · L1 ergibt oder anders ausgedrückt, die Breite des zweiten Rasters R_{B2} entspricht dreimal der Breite der ersten Wechselwirkungsflächen 7 plus zweimal der Breite der ersten Lücken L1.

Auf Basis des zuvor erläuterten Zusammenhangs bezüglich der Breite B_{R2} kann das zweite Raster R2 somit je nach Bedarf unterschiedlich Breit gewählt werden. Die Wahl eines größeren Wechselwirkungsflächen-Parameter n ist beispielsweise dann sinnvoll, wenn die induktive Positionsmesseinrichtung 1 mit erhöhter Genauigkeit innerhalb eines größeren Messbereichs MB2 arbeiten soll. Ist dies nur innerhalb eines kleineren Messbereichs nötig bzw. soll die induktive Positionsmesseinrichtung 1 besonders genaue Messwerte liefern, so kann ein geringerer Wechselwirkungsflächen-Parameter n gewählt werden. Ein solches alternatives Ausführungsbeispiel ist in Fig. 7 gezeigt, dass einen Skalenträger 2 mit einem Wechselwirkungsflächen-Parameter von n = 1 zeigt. In diesem Ausführungsbeispiel umfasst das erste Raster R1 sieben - sechs vollständig besetzte und eine unvollständig mit ersten Wechselwirkungsflächen 7 besetzte - Reihe(n) und sieben - sechs vollständig besetzte und eine unvollständig mit ersten Wechselwirkungsflächen 7 besetzte - Spalte(n) aus ersten Wechselwirkungsflächen 7. Die unbesetzte Stelle in der Mitte des ersten Rasters R1 umfasst das zweite Raster R2 mit einer Breite von BR2 = 1 · B1 + 0 · L1 = B1, wobei das zweite Raster R2 fünf Spalten und fünf Reihen von zweiten Wechselwirkungsflächen 8 umfasst.

Die induktive Positionsmesseinrichtung 1 kann durch die ersten Sensorelemente 4 und die zweiten Sensorelemente 5 eine hochgenaue Positionsbestimmung bei einem vergleichsweisen großen Messbereich vornehmen, indem diese mit den Wechselwirkungsflächen 7, 8 induktiv Wechselwirken.

Bei der nach einem inkrementellen Messverfahren arbeitenden induktiven Positionsmesseinrichtung 1 erfolgt die absolute Positionsbestimmung innerhalb von definierten Messbereichen MB1, MB2 welche durch die ersten bzw. zweiten Sensorelemente 3, 4 ausgebildet werden.

Die zu einem Viereck in Form eines Quadrats angeordneten ersten Sensorelemente 4 bilden jeweils einen Teilmessbereich MB1.1, MB1.2, MB1.3, MB1.4 aus, innerhalb denen durch das entsprechende erste Sensorelement 4 eine absolute Positionsbestimmung durchführbar ist. Hierzu wechselwirken die ersten Sensorelemente 4 mit ihren Sendevorrichtungen 6-1 zumindest mit den ersten Wechselwirkungsflächen 7, die sie bei Betrachtung in der Z-Richtung überlagern, induktiv. Durch die Empfangsvorrichtungen 9-1 wird anschließend eine Änderung des magnetischen Flusses für jene ersten Wechselwirkungsflächen 7 empfangen, die im Teilmessbereich MB1.1, MB1.2, MB1.3, MB1.4 des entsprechenden ersten Sensorelements 4 liegen, wodurch eine Absolutposition des entsprechenden ersten Sensorelements 4 bestimmt werden kann.

Die Teilmessbereiche MB1.1, MB1.2, MB1.3, MB1.4 der ersten Sensorelemente 4, innerhalb denen durch die induktive Positionsmesseinrichtung 1 ein absoluter Positionswert bestimmt werden kann, besitzen in lateraler Richtung (XY-Ebene) eine Ausdehnung entsprechend der ersten Periodenlänge T1 der ersten Sensorelemente 4. Dabei entspricht die erste Periodenlänge T1 der Breite der ersten Wechselwirkungsflächen B1 plus der Breite der ersten Lücken L1 (T1 = B1 + L1).

Analog gilt für die zweiten Sensorelemente 5, die ebenfalls zu einem Viereck in Form eines Quadrats innerhalb der ersten Teilfläche F1 angeordnet sind, dass durch das induktive Wechselwirken von zweiten Sensorelementen 5 mit zumindest einem Teil der zweiten Wechselwirkungsflächen 8 eine absolute Positionsbestimmung innerhalb der entsprechenden Teilmessbereiche MB2.1, MB2.2, MB2.3, MB2.4 der zweiten Sensorelemente 5 erzielt werden kann. Mit einem induktiven Wechselwirken ist gemeint, dass durch die Sendevorrichtungen 6-2 ein magnetischer Fluss zumindest in den zweiten Wechselwirkungsflächen 8, die von den entsprechenden zweiten Sensorelementen 5 bei einer Betrachtung entlang der Z-Richtung überlagert werden, erzeugt wird. Durch die Empfangsvorrichtungen 9-2 kann dann anschließend eine Änderung des magnetischen Flusses bezüglich der zweiten Wechselwirkungsflächen 8 innerhalb der Teilmessbereiche MB2.1, MB2.2, MB2.3, MB2.4 empfangen werden, wodurch eine Absolutposition der entsprechenden zweiten Sensorelemente 5 bestimmt werden kann.

Die Teilmessbereiche MB2.1, MB2.2, MB2.3, MB2.4 der zweiten Sensorelemente 5, innerhalb denen durch die induktive Positionsmesseinrichtung 1 ein absoluter Positionswert bestimmt werden kann, besitzen in lateraler Richtung (XY) eine Ausdehnung entsprechend der zweiten Periodenlänge T2 der zweiten Sensorelemente 5. Für die zweite Periodenlänge T2 gilt, dass diese der Breite der zweiten Wechselwirkungsflächen B2 plus der Breite der zweiten Lücken L2 entspricht (T2 = B2 + L2).

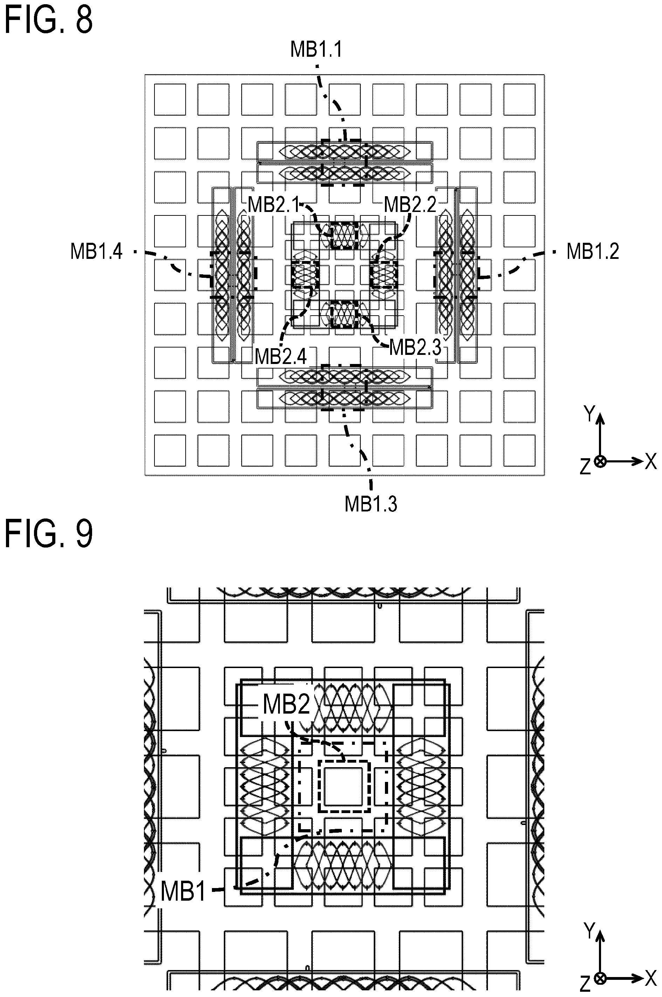

Die einzelnen Teilmessbereiche MB1.1, MB1.2, MB1.3, MB1.4; MB2.1, MB2.2, MB2.3, MB2.4 besitzen eine variable Ausdehnung in der Abstandsrichtung Z, welche proportional zur Signalperiodenlänge und der Periodenlänge T1, T2 des entsprechenden Sensorelements ist. Folglich erstrecken sich für das Ausführungsbeispiel in Fig. 8 die Teilmessbereiche MB1.1, MB1.2, MB1.3, MB1.4 der ersten Sensorelemente 4 bezüglich der Abstandsrichtung Z weiter in Richtung des Skalenelements 20 als die zweiten Teilmessbereiche MB2.1, MB2.2, MB2.3, MB2.4 der zweiten Sensorelemente 5.

Durch gezielte Verrechnung der einzelnen Teilmessbereiche MB1.1, MB1.2, MB1.3, MB1.4 der ersten Sensorelemente 4 sowie der einzelnen Teilmessbereiche MB2.1, MB2.2, MB2.3, MB2.4 der zweiten Sensorelemente 5 können diese jeweils zu einem Messbereich MB1 für alle ersten Sensorelemente 4 und zu einem Messbereich MB2 für alle zweiten Sensorelemente 5 im Mittelpunkt M des Sensorträgers 3 zusammengefasst werden.

Durch die kleinere Periodenlänge T2 der zweiten Sensorelemente 5 und die entsprechend ausgebildeten zweiten Wechselwirkungsflächen 8 kann durch die zweiten Sensorelemente 5 innerhalb eines kleineren Messbereichs MB2 eine hohe Auflösung erzielt werden. Gleichzeitig wird durch die ersten Sensorelemente 7 ein großer Messbereichs MB1 bereitgestellt, innerhalb dem eine Positionsbestimmung großflächig erfolgen kann.

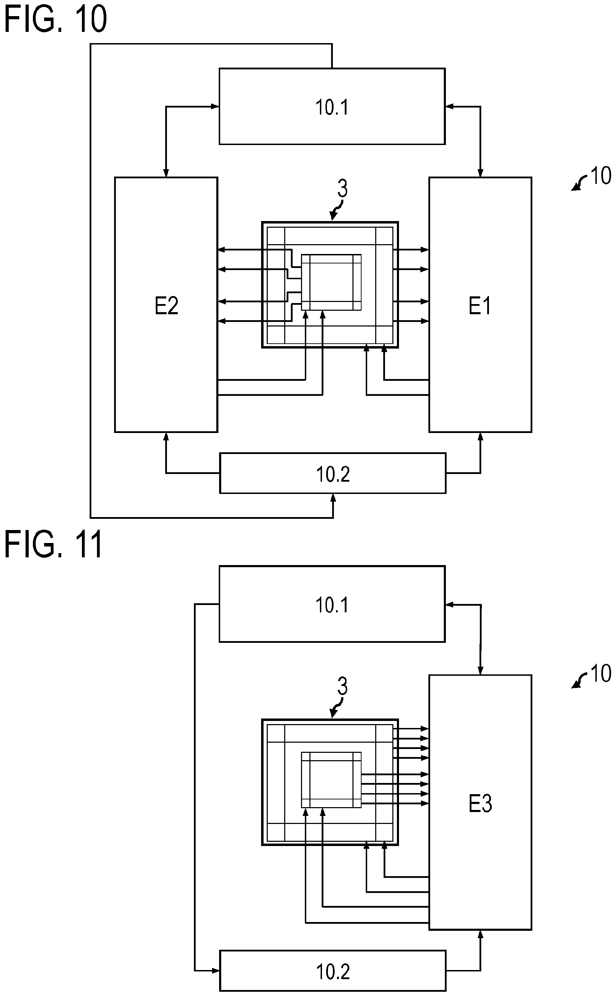

Die induktive Positionsmesseinrichtung 1 umfasst somit zwei Sensoranordnungen, bestehend aus den zu einem Viereck angeordneten ersten Sensorelementen 4 und den zu einem weiteren Viereck angeordneten zweiten Sensorelementen 5, welche ineinander angeordnet sind, um sowohl einen großen Messbereich als auch eine hohe Auflösung in einem System zu kombinieren. Fig. 10 zeigt beispielhaft ein erstes Ausführungsbeispiel einer Mess- und Auswerteinrichtung 10 der induktiven Positionsmesseinrichtung 1 als schematisches Blockdiagramm.

Die Mess- und Auswerteeinrichtung 10 umfasst mindestens ein Auswertemodul in Form einer anwendungsspezifischen integrierten Schaltung (ASIC) 10.1, ein Signalgeneratormodul in Form eines Erregerschwingkreises 10.2 sowie zwei Elektronikbaugruppen E1, E2 zum Schalten und Regeln der Sensorelemente 4, 5.

Die erste und zweite Elektronikbaugruppe E1, E2 sind jeweils mit dem ASIC 10.1 verbunden sowie jeweils mit dem Erregerschwingkreis 10.2. Die erste Elektronikbaugruppe E1 sorgt bei einer Positionsbestimmung für eine zyklisches und abwechselndes Betreiben der einzelnen ersten Sensorelemente 4. Die zweite Elektronikbaugruppe E2 sorgt bei einer Positionsbestimmung für eine zyklisches und abwechselndes Betreiben der einzelnen zweiten Sensorelemente 5. Vorteilhafterweise werden jene erste Sensorelemente 4 bzw. jene zweiten Sensorelemente 5, die zueinander parallel und entlang einer identischen Messrichtung X, Y angeordnet sind, gleichzeitig betrieben. Das heißt, dass innerhalb eines Messzyklus zunächst nur die in der ersten Messrichtung X verlaufenden ersten Sensorelemente 4 bzw. zweiten Sensorelemente 5 betrieben werden. Hierbei erfolgt ein zeitweiser Anschluss der Sendevorrichtungen 6-1 bzw. der Sendevorrichtungen 6-2 der ersten Sensorelemente 4 bzw. der zweiten Sensorelemente 5 an den Erregerschwingkreis 10.2 und darauffolgend ein gesonderter Anschluss der Empfangsvorrichtungen 9-1 bzw. der Empfangsvorrichtungen 9-2 der ersten Sensorelemente 4 bzw. der zweiten Sensorelemente 5 an den ASIC 10.1.

Durch das abwechselnde Betreiben der ersten Sensorelemente 4 bzw. der zweiten Sensorelemente 5 in der ersten und zweiten Messrichtung X, Y ergibt sich der Vorteil, dass Elektronikbauteile innerhalb der Mess- und Auswerteeinrichtung 10 eingespart werden können. Insbesondere gilt dies für den ASIC 10.1 und den Erregerschwingkreis 10.2, welche sowohl zum Betreiben der ersten Sensorelemente 4 als auch der zweiten Sensorelemente 5 jeweils für beide Messrichtungen X, Y genutzt werden können.

Bevorzugt erfolgt bei einer Positionsbestimmung mit einer Mess- und Auswertevorrichtung 10 gemäß dem ersten Ausführungsbeispiel aus Fig. 10 nach einer vorteilhaften Regelungs- und Steuerlogik: Befindet sich der Sensorträger 3 mit der zweiten Sensoranordnung, umfassend die zweiten Sensorelemente 5, zumindest teilweise im Bereich der zweiten Wechselwirkungsflächen 8, d. h. zumindest einer der zweiten Sensorelemente 5 überlagert bei einer Draufsicht in Z-Richtung zumindest teilweise das zweite Raster R2, kann zusätzlich zu den Positionswerten und ergänzend oder alternativ den Abstandswerten der dauerhaft betriebenen ersten Sensoranordnung, umfassend die ersten Sensorelemente 4, zusätzlich hochgenaue Positionswerte und ergänzend oder alternativ hochgenaue Abstandswerte, gebildet aus den Messinformationen der zweiten Sensorelemente 5, ausgegeben werden. Aufgrund der kleineren Periodenlänge T2 der zweiten Sensorelemente 5 sind die Messinformationen höher aufgelöst und damit in der Regel genauer als die Messinformationen der ersten Sensorelemente 4.

Zusammengefasst lässt sich das Messverfahren gemäß des ersten Ausführungsbeispiels der Mess- und Auswerteeinrichtung 10 wie folgt beschreiben: Bei einer Positionsbestimmung durch die induktive Positionsmesseinrichtung 1 werden die ersten Sensorelemente 4 dauerhaft zyklisch und abwechselnd betrieben, unabhängig davon welches der Raster R1, R2 des Skalenelements 2 durch den Sensorträger 3 überlagert wird. Die zweiten Sensorelemente 5 werden dabei nicht betrieben, solange diese sich nicht über zumindest einer zweiten Wechselwirkungsfläche 8 des zweiten Rasters R2 befinden. Maßgeblich ist hierbei der zweite kombinierte Messbereich MB2. Jedoch ist es auch möglich, dass hierfür die entsprechenden Teilmessbereich MB2.1, MB2.2, MB2.3, MB2.4 herangezogen werden können.

Alternativ kann die induktive Positionsmesseinrichtung 1 auch ein zweites Ausführungsbeispiel der Mess- und Auswerteeinrichtung 10 umfassen, welches in Fig. 11 schematisch als Blockdiagramm dargestellt ist.

Bei diesem alternativen Ausführungsbeispiel umfasst die Mess- und Auswerteeinrichtung 10 mindestens ein Auswertemodul in Form einer anwendungsspezifischen integrierten Schaltung (ASIC) 10.1, ein Signalgeneratormodul in Form eines Erregerschwingkreises 10.2, jedoch nur eine Elektronikbaugruppe E3 zum Schalten und Regeln der Sensorelemente 4, 5.

Die dritte Elektronikbaugruppe E3 ist mit dem ASIC 10.1 verbunden sowie mit dem Erregerschwingkreis 10.2. Die dritte Elektronikbaugruppe E3 sorgt bei einer Positionsbestimmung für eine zyklisches und abwechselndes Betreiben der einzelnen ersten Sensorelemente 4 oder zweiten Sensorelemente 5. Vorteilhafterweise werden dabei ebenfalls jene ersten Sensorelemente 4 oder jene zweiten Sensorelemente 5, die zueinander parallel bzw. entlang einer identischen Messrichtung X, Y angeordnet sind, gleichzeitig betrieben.

Bei einer Positionsbestimmung mit der Mess- und Auswerteeinrichtung 10 gemäß dem zweiten Ausführungsbeispiel aus Fig. 11 wird bevorzugt die folgende Regelungs- und Steuerungslogik angewendet: Befindet sich der Sensorträger 3 mit der zweiten Sensoranordnung, umfassend die zweiten Sensorelemente 5, zumindest teilweise im Bereich der zweiten Wechselwirkungsflächen 8, d. h. zumindest eines der zweiten Sensorelemente 5 überlagert bei einer Draufsicht in Z-Richtung zumindest teilweise das zweite Raster R2, so werden die zweiten Sensorelemente 5 betrieben und die ersten Sensorelemente 4 nicht betrieben. Wenn sich während einer Positionsbestimmung die zweiten Sensorelemente 5 nicht (mehr) über zumindest einer zweiten Wechselwirkungsfläche 8 befinden, werden die ersten Sensorelemente 4 betrieben und die zweiten Sensorelemente 5 nicht betrieben. D. h. es wird immer nur ein Positionswert und ergänzend oder alternativ ein Abstandswert ausgegeben, entweder auf Basis der Messung der ersten Sensorelemente 4 oder auf Basis der zweiten Sensorelemente 5. Dadurch müssen beide Sensoranordnungen nicht gleichzeitig betrieben werden und es können für die Mess- und Auswerteeinrichtung 10 Elektronikkomponenten eingespart werden, da nur eine dritte Elektronikbaugruppe E3 benötigt wird.

Die Mess- und Auswerteeinrichtung 10 der induktiven Positionsmesseinrichtung 1 ist jedoch nicht auf die in den Fig. 10 und 11 gezeigten Ausführungsbeispiele beschränkt. So können beispielsweise statt eines gemeinsam genutzten ASICs 10.1 durch die ersten und zweiten Sensorelemente 4, 5 alternativ auch sowohl für die ersten Sensorelemente 4 ein erster ASIC vorgesehen sein und für die zweiten Sensorelemente 5 ein zweiter ASIC. Ergänzend oder alternativ kann auch statt eines gemeinsam genutzten Erregerschwingkreises 10.2 ein erster Erregerschwingkreis für die ersten Sensorelemente 4 und ein zweiter Erregerschwingkreis für die zweiten Sensorelemente 5 vorgesehen sein.

Die erfindungsgemäße induktive Positionsmesseinrichtung 1 lässt sich beispielsweise bei der Kalibrierung oder Korrektur der Position des Endeffektors eines Industrieroboters einsetzen. Der Industrieroboter positioniert zunächst seinen Endeffektor innerhalb eines Zielbereichs im Rahmen der vergleichsweise geringen Genauigkeit seiner Aktoren. Innerhalb des Zielbereichs befindet sich das Skalenelement 2. Anschließend wird zunächst auf Basis des größeren ersten Messbereichs MB1 der ersten Sensorelemente 4 und des ersten Rasters R1 der induktiven Positionsmesseinrichtung 1 ein erster Positionswert ausgegeben und eine Korrektur der Endeffektor-Position durch den Industrieroboter vorgenommen, sodass der zweite Messbereich MB2 das zweite Raster R2 teilweise überlagert. Nun kann ein weiterer hochgenauer Positionswert auf Basis des kleineren zweiten Messbereichs MB2 der zweiten Sensorelemente 5 und des zweiten Rasters R2 ausgegeben werden, auf dessen Basis der Endeffektor des Industrieroboters dann hochgenau positioniert werden kann.

### BEZUGSZEICHENÜBERSICHT

- 1: induktive Positionsmesseinrichtung,
- 2: Skalenelement,
- 2-2: Trägersubstrat des Skalenelements,
- 3: Sensorträger,
- 3-1: Trägersubstrat des Sensorträgers,
- 4: erstes Sensorelement,
- 5: zweites Sensorelement,
- 6-1: Sendevorrichtung eines ersten Sensorelements,
- 6-2: Sendevorrichtung eines zweiten Sensorelements,
- 7: erste Wechselwirkungsfläche,
- 8: zweite Wechselwirkungsfläche,
- 9-1: Empfangsvorrichtung eines ersten Sensorelements,
- 9-1.1: erste Empfangseinheit eines ersten Sensorelements,
- 9-1.2: zweite Empfangseinheit eines ersten Sensorelements,
- 9-1.3: erste Spulenleitung eines ersten Sensorelements,
- 9-1.4: zweite Spulenleitung eines ersten Sensorelements,
- 9-1.5: dritte Spulenleitung eines ersten Sensorelements,
- 9-1.6: vierte Spulenleitung eines ersten Sensorelements,
- 9-2: Empfangsvorrichtung eines zweiten Sensorelements,
- 9-2.1: erste Empfangseinheit eines zweiten Sensorelements,
- 9-2.3: erste Spulenleitung eines zweiten Sensorelements,
- 9-2.4: zweite Spulenleitung eines zweiten Sensorelements,
- 10: Mess- und Auswerteeinrichtung,
- 10.1: ASIC,
- 10.2: Erregerschwingkreis,

- M: Mittelpunkt,
- F1: erste Teilfläche,
- F2: weitere Teilfläche,
- T1: erste Periodenlänge,
- T2: zweite Periodenlänge,
- A1: erste Amplitude,
- A2: zweite Amplitude,
- V1: erster Versatz,
- V2: zweiter Versatz,
- V3: dritter Versatz,

- B1: erste Breite,
- B2: zweite Breite,
- L1: erste Lücke,
- L2: zweite Lücke,
- R1: erstes Raster,
- R2: zweites Raster,
- n: Wechselwirkungsflächen-Parameter,

- E1: erste Elektronikbaugruppe,
- E2: zweite Elektronikbaugruppe,
- E3: dritte Elektronikbaugruppe,
- MB1: erster Messbereich (erstes Sensorelement),
- MB1.1: erster Teilmessbereich (erstes Sensorelement),
- MB1.2: zweiter Teilmessbereich (erstes Sensorelement),
- MB1.3: dritter Teilmessbereich (erstes Sensorelement),
- MB1.4: vierter Teilmessbereich (erstes Sensorelement),
- MB2: zweiter Messbereich (zweites Sensorelement),
- MB2.1: erster Teilmessbereich (zweites Sensorelement),
- MB2.2: zweiter Teilmessbereich (zweites Sensorelement),
- MB2.3: dritter Teilmessbereich (zweites Sensorelement),
- MB2.4: vierter Teilmessbereich (zweites Sensorelement),
- X: erste Messrichtung,
- Y: zweite Messrichtung,
- Z: dritte Messrichtung;

## Patentansprüche

1. Induktive Positionsmesseinrichtung (1), umfassend:
- ein Skalenelement (2) mit mehreren Wechselwirkungsflächen (7, 8) und
- einem Sensorträger (3) mit mehreren ersten Sensorelementen (4), wobei der Sensorträger (3) gegenüber dem Skalenelement (2) angeordnet und relativ zu diesem in mindestens zwei Messrichtungen (X, Y) bewegbar ist,
wobei die ersten Sensorelemente (4) jeweils beinhalten:
• eine Sendevorrichtung (6-1), durch die ein magnetischer Fluss in den Wechselwirkungsflächen (7, 8) erzeugbar ist und
• eine Empfangsvorrichtung (9-1), mit mindestens einer ersten Empfangseinheit (9-1.1), durch die eine Änderung des magnetischen Flusses empfangbar ist,
wobei die ersten Sensorelemente (4) so angeordnet sind, dass diese Seiten eines ersten Vierecks bilden, sodass diese eine erste Teilfläche (F1) des Sensorträgers (3) definieren,
**dadurch gekennzeichnet,**
**dass** der Sensorträger (3) mindestens ein zweites Sensorelement (5) umfasst,
wobei das zweite Sensorelement (5) innerhalb der ersten Teilfläche (F1) angeordnet ist.

2. Induktive Positionsmesseinrichtung nach Anspruch 1, **dadurch gekennzeichnet, dass** mindestens ein zweites Sensorelement (5) für die erste Messrichtung (X) und mindestens ein zweites Sensorelement (5) für die zweite Messrichtung (Y) vorgesehen sind, welche jeweils beinhalten:
• eine Sendevorrichtung (6-2), durch die ein magnetischer Fluss in den Wechselwirkungsflächen (7, 8) erzeugbar ist und
• eine Empfangsvorrichtung (9-2), mit mindestens einer ersten Empfangseinheit (9-2.1, 9-2.2), durch die jeweils eine Änderung des magnetischen Flusses empfangbar ist.

3. Induktive Positionsmesseinrichtung nach Anspruch 2, **dadurch gekennzeichnet, dass** die erste Empfangseinheit (9-1.1) der ersten Sensorelemente (4) als sinusförmige Empfängerleitungen mit einer ersten Periodenlänge (T1) ausgebildet ist, und
dass die erste Empfangseinheit (9-2.1) der zweiten Sensorelemente (5) als sinusförmige Empfängerleitungen mit einer zweiten Periodenlänge (T2) ausgebildet ist, wobei die zweite Periodenlänge (T2) kleiner als die erste Periodenlänge (T1) ist.

4. Induktive Positionsmesseinrichtung nach einem der vorhergehenden Ansprüche, **dadurch gekennzeichnet, dass** die ersten Sensorelemente (4) jeweils neben der ersten Empfangseinheit (9-1.1) auch eine zweite Empfangseinheit (9-1.2) aufweisen, welche identisch zur ersten Empfangseinheit (9-1.1) der ersten Sensorelemente (4) ausgebildet ist.

5. Induktive Positionsmesseinrichtung nach Anspruch 2, **dadurch gekennzeichnet, dass** die zweiten Sensorelemente (5) jeweils neben der ersten Empfangseinheit (9-2.1) auch eine zweite Empfangseinheit (9-2.2) aufweisen, welche identisch zur ersten Empfangseinheit (9-2.1) der zweiten Sensorelemente (5) ausgebildet ist.

6. Induktive Positionsmesseinrichtung nach mindestens einem der Ansprüche 3 bis 5, **dadurch gekennzeichnet, dass** die Empfängerleitungen der ersten bzw. zweiten Empfangseinheit (9-1.1, 9-1.3; 9-2.1, 9-2.2) der ersten und zweiten Sensorelemente (4; 5) jeweils zwei Spulenleitungen (9-1.3, 9-1.4, 9-1.5, 9-1.6; 9-2.3, 9-2.4) umfassen, welche jeweils aus mehreren Leitungsteilstücken ausgebildet sind, wobei die zwei Spulenleitungen entlang der Längserstreckung des entsprechenden ersten bzw. zweiten Sensorelements (4; 5) mit einem Versatz (V1, V2) verschoben angeordnet sind.

7. Induktive Positionsmesseinrichtung nach Anspruch 4 und/oder 5, **dadurch gekennzeichnet, dass** die erste Empfangseinheit (9-1.1; 9-2.1) zur zweiten Empfangseinheit (9-1.2; 9-2.2) der ersten bzw. zweiten Sensorelemente (4; 5) jeweils einen Versatz (V3) in der zur Längserstreckung des entsprechenden Sensorelements orthogonalen Richtung aufweist.

8. Induktive Positionsmesseinrichtung nach einem der vorhergehenden Ansprüche, **dadurch gekennzeichnet, dass** mindestens vier zweite Sensorelemente (5) vorgesehen sind, welche so angeordnet sind, dass diese Seiten eines weiteren Vierecks bilden, sodass diese eine weitere Teilfläche (F2) der ersten Teilfläche (F1) definieren.

9. Induktive Positionsmesseinrichtung nach Anspruch 8, **dadurch gekennzeichnet, dass** die ersten Sensorelemente (4) und die zweiten Sensorelemente (5) konzentrisch zum Mittelpunkt (M) des Sensorträgers (2) angeordnet sind.

10. Induktive Positionsmesseinrichtung nach einem der vorhergehenden Ansprüche, **dadurch gekennzeichnet, dass** das Skalenelement (2)
• mehrere erste Wechselwirkungsflächen (7) mit einer ersten Breite (B1) umfasst, welche zu einem ersten Raster (R1) mit ersten Lücken (L1) angeordnet sind, und
• mehrere zweite Wechselwirkungsflächen (8) mit einer zweiten Breite (B2) umfasst, welche zu einem zweiten Raster (R2) mit zweiten Lücken (L2) angeordnet sind,
wobei die zweite Breite (B2) kleiner als die erste Breite (B1) ist und die zweiten Lücken (L2) kleiner als die ersten Lücken (L1) sind.

11. Induktive Positionsmesseinrichtung nach Anspruch 3 und 10, **dadurch gekennzeichnet, dass** für die erste Periodenlänge (T1) und die zweite Periodenlänge (T2) folgender Zusammenhang gilt: $T 1 = B 1 + L 1 und T 2 = B 2 + L 2 ;$ mit:
T1 := erste Periodenlänge,
T2 := zweite Periodenlänge,
B1 := Breite der ersten Wechselwirkungsflächen,
B2 := Breite der zweiten Wechselwirkungsflächen,
L1 := Breite der ersten Lücken,
L2 := Breite der zweiten Lücken;

12. Induktive Positionsmesseinrichtung nach Anspruch 10, **dadurch gekennzeichnet, dass** für die Abmessung des zweiten Rasters folgender Zusammenhang gilt: ${B}_{R 2} = n ⋅ B 1 + \left(n-1\right) ⋅ L 1 ;$ mit:
B_{R2} := Abmessung des zweiten Rasters in der ersten bzw. zweiten Messrichtung (X, Y),
B1 := Breite der ersten Wechselwirkungsflächen,
L1 := Breite der ersten Lücken,
n := Wechselwirkungsflächen-Parameter mit $n ∈ ℕ *$;

13. Induktive Positionsmesseinrichtung nach Anspruch 10, **dadurch gekennzeichnet, dass** das zweite Raster (R2) aus zweiten Wechselwirkungsflächen (8) von dem ersten Raster (R1) aus ersten Wechselwirkungsflächen (7) teilweise oder vollständig umgeben ist.

14. Induktive Positionsmesseinrichtung nach mindestens einem der Ansprüche 10 bis 13, **dadurch gekennzeichnet,**
• **dass** die ersten Sensorelemente (4) durch eine erste Elektronikbaugruppe (E1) betreibbar sind und ihnen mindestens ein erster Messbereich (MB1) zugeordnet ist und
• **dass** die zweiten Sensorelemente (5) durch eine zweite Elektronikbaugruppe (E2) betreibbar sind und ihnen mindestens ein zweiter Messbereich (MB2) zugeordnet ist,
wobei bei einer Positionsbestimmung die ersten Sensorelemente (4) betrieben werden und die zweiten Sensorelemente (5) nur dann betrieben werden, wenn sich das zweite Raster (R2) zumindest teilweise innerhalb des zweiten Messbereichs (MB2) befindet.

15. Induktiven Positionsmesseinrichtung nach mindestens einem der Ansprüche 10 bis 13, **dadurch gekennzeichnet,**
**dass** die induktive Positionsmesseinrichtung eine dritte Elektronikbaugruppe (E3) zum abwechselnden Betreiben der ersten und zweiten Sensorelemente (4; 5) umfasst, wobei den ersten bzw. zweiten Sensorelementen (4; 5) jeweils mindestens ein erster bzw. zweiter Messbereich (MB1; MB2) zugeordnet ist,
wobei bei einer Positionsbestimmung
• nur die ersten Sensorelemente (4) betrieben werden, wenn sich das zweite Raster (R2) außerhalb des zweiten Messbereichs (MB2) befindet, und
• nur die zweiten Sensorelemente (5) betrieben werden, wenn sich das zweite Raster (R2) zumindest teilweise innerhalb des zweiten Messbereichs (MB2) befindet.
